(19) **Europäisches Patentamt**

**European Patent Office**

**Office européen des brevets**

(11) **EP 1 056 248 A1**

(12) **EUROPÄISCHE PATENTANMELDUNG**

(43) Veröffentlichungstag:
29.11.2000 Patentblatt 2000/48

(51) Int. Cl.⁷: $H04L\ 27/00$, $H04L\ 27/36$

(21) Anmeldenummer: 99810456.6

(22) Anmeldetag: 26.05.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom AG**
**3000 Bern 14 (CH)**

(72) Erfinder:
• **Wüthrich, Thomas**
**4500 Solothurn (CH)**

• **Günther, Dr. Christoph**
**164460 Kista (SE)**

(74) Vertreter:
**Roshardt, Werner Alfred, Dipl.-Phys.**
**Keller & Partner**
**Patentanwälte AG**
**Zeughausgasse 5**
**Postfach**
**3000 Bern 7 (CH)**

(54) **Modulator, der getrennte Stufen für Phase und Amplitude verwendet**

(57) Bei einem digital gesteuerten Sender zur Erzeugung eines Sendesignals in einem bestimmten Modulationsformat wird das Sendesignal mit Hilfe eines spannungsgesteuerten Oszillators, d.h. eines VCO (3) und eines Leistungsverstärkers, d.h. eines PA (4) erzeugt. Die Modulation der Phase bzw. der Amplitude des Sendesignals erfolgt entsprechend dem Modulationsformat durch direkte Ansteuerung des spannungsgesteuerten Oszillators mit einem Phasensteuersignal (s4) bzw. durch Ansteuerung des Leistungsverstärkers mit einem Amplitudensteuersignal (s3). Durch einen digitalen Vergleich des zwischengespeicherten Sendesignals mit dem rückgekoppelten und demodulierten Sendesignal werden die Parameter für die Generierung der beiden Steuersignale nachgeführt. Der digital gesteuerte Sender eignet sich vorzugsweise für den Einsatz in Mobilfunktelefonen, insbesondere in multimode Geräten.

Fig. 1

EP 1 056 248 A1

## Beschreibung

### Technisches Gebiet

Die Erfindung betrifft ein Verfahren zur Erzeugung eines Sendesignals in einem Modulationsformat, wobei das Sendesignal entsprechend dem Modulationsformat mit Hilfe eines spannungsgesteuerten Oszillators und eines Leistungsverstärkers erzeugt wird. Ferner betrifft die Erfindung eine Schaltungsanordnung zur Durchführung dieses Verfahrens und die Verwendung dieser Schaltungsanordnung in einem Mobilfunktelefon.

### Stand der Technik

Mobilfunktelefone gehören heute schon zum Alltag vieler Menschen. Es gibt Länder, in denen schon mehr als die Hälfte der Bevölkerung ein Handy besitzen. Durch diese Dichte an Mobilfunksendern und die beschränkten Frequenzbänder, die zur Übertragung von Mobilfunksignalen zur Verfügung stehen, sollten Modulationsverfahren eingesetzt werden, die eine höhere spektrale Effizienz ermöglichen. Es ist eine vordringliche Aufgabe, Sender für eine kosteneffiziente Erzeugung dieser Signale zu konstruieren.

Ein vielbenutzter Mobilfunkstandard ist GSM (Global System for Mobile Communication). Im GSM wird ein Modulationsverfahren mit konstanter Envelope, d.h. konstanter Amplitude des modulierenden Signals, eingesetzt. Gegenüber einem Standard mit variabler Envelope weist dieses Modulationsverfahren allerdings eine geringere Bandbreiteneffizienz auf. Ein energieeffizientes Sendeprinzip ist das heute ebenfalls häufig eingesetzte OPLL (Offset Phase-Locked Loop) Verfahren. Dabei wird das von einem VCO (Voltage Controlled Oscillator = spannungsgesteuerter Oszillator) erzeugte Sendesignal mit der Phasendifferenz des modulierten Zwischenfrequenzsignals und des rückgekoppelten Sendesignals phasenmoduliert. Dies bedingt eine schnelle Rückkopplung, damit am Ausgang des VCO die instantane Frequenz des Sendesignals entsprechend der Phasenverschiebung korrigiert werden kann. Das Sendesignal weist bei diesem Verfahren eine gute spektrale Reinheit auf. Dadurch kann die Filterung am Ausgang der Endstufe reduziert werden. Dies hat zur Folge, dass der Energieverbrauch eines GSM OPLL-Senders kleiner ist. Allerdings kann dieses Verfahren nur für Modulationsarten mit konstanter Envelope eingesetzt werden. Viele aktuelle Modulationsstandards, die eine hohe Bandbreiteneffizienz aufweisen, haben jedoch eine nicht konstante Envelope. Zur Realisierung von multimode Geräten muss daher konventionelle Technik verwendet werden. Entsprechende Senderschaltungen sind aber aufwendig und damit sowohl teuer als auch umfangreich.

### Darstellung der Erfindung

Aufgabe der Erfindung ist es, ein Verfahren der eingangs erwähnten Art anzugeben, das die beim Stand der Technik vorhandenen Probleme vermeidet und insbesondere ein energie- und bandbreiteneffizientes Übertragen digitaler Daten erlaubt.

Die Lösung der Aufgabe ist durch die Merkmale des Anspruchs 1 definiert. Gemäss der Erfindung wird ein Modulationssignal generiert, das aus einem Phasenanteil und einem Amplitudenanteil besteht. Das Sendesignal wird erzeugt durch einen VCO, dessen Ausgangssignal mit einem PA (Power Amplifier = Leistungsverstärker) auf das benötigte Leistungsniveau verstärkt wird. Um dem Sendesignal nun die zu sendenden Informationen aufzumodulieren, wird einerseits mit dem Phasenanteil des Modulationssignals ein Phasensteuersignal und andererseits aus dem Amplitudenanteil des Modulationssignals ein Amplitudensteuersignal gewonnen. Mit dem Phasensteuersignal wird direkt die Eingangsspannung des VCO und damit die Phase des Sendesignals moduliert. Mit dem Amplitudensteuersignal wird die Speisespannung des PA und damit die Amplitude des Sendesignals moduliert.

Durch die Aufteilung der allgemeinen Modulation in eine Phasen- und eine Amplitudenmodulation wird es möglich, das OPLL-Sendeprinzip auf Signale mit veränderlicher Envelope zu erweitern. Die Phasenmodulation des Sendesignals für sich genommen bleibt unverändert gegenüber dem GSM OPLL-Sender, was die Verwendung bestehender, hochintegrierter Chipsätze erlaubt. Durch die Modulation der Speisung der Endstufe können effizientere Leistungsverstärker eingesetzt werden, was den Leistungsbedarf des Gerätes senkt.

Mit einem sogenannten I/Q-Mapper werden aus den zunächst binär vorliegenden Daten Symbole generiert. Ein solches Symbol besteht aus einer I- und einer Q-Information. Fasst man die I-Information als Real- und die Q-Information als Imaginärteil einer komplexen Zahl auf, kann ein Symbol als ein Punkt in der komplexen Ebene dargestellt werden. Wechselt man nun von den kartesischen Koordinaten zu Polarkoordinaten, so wird der durch I und Q beschriebene Punkt eindeutig beschrieben durch einen Symbolvektor vom Ursprung dieses Koordinatensystems zu diesem Punkt. Diese Abfolge von Symbolvektoren kann als digitales, zeitabhängiges Referenzsignal, dessen Amplitude der Länge eines Symbolvektors und dessen Phase dem Winkel zwischen einer Achse und dem Symbolvektor entspricht, interpretiert werden. Um unerwünschte Spektralanteile im Referenzsignal zu unterdrücken, werden diese anschliessend mit einem Pulsformungs-Filter herausgefiltert. Die beiden Signale, der Amplituden- und der Phasenanteil des Referenzsignals werden als Amplituden- und Phasensteuersignal weiterverwendet. Nach der Modulation erfolgt eine Rückkopplung des Sendesignals. Der Koppler kann dabei vor oder nach dem PA plaziert sein. Durch einen digitalen Phasenvergleich der Phase der Rückkopplung mit der Phase des Referenzsignals wird ein Phasenfehlersignal gewonnen, mit welchem die Phasenmodulation d.h. das Phasensteuersignal beeinflusst und nachgeführt bzw. korrigiert werden kann.

Häufig werden solche Signale in sogenannten TDMA (Time Division Multiple Access)-Bursts übertragen. Das heisst, dass eine bestimmte Anzahl von Symbolen in einem bestimmten Zeitschlitz des Sendesignals gesendet werden. Realisiert wird dies, indem das Referenzsignal mit einem Rampensignal multipliziert wird, welches zuerst langsam ansteigt, bis das gewünschte Leistungsniveau am Ausgang des PA erreicht ist, dann solange konstant bleibt wie der Zeitschlitz andauert und am Schluss wieder langsam abklingt.

Die Ansteuerung des VCO, d.h. die Phasenmodulation des Sendesignals, erfolgt mit dem Phasenanteil des Modulationssignals. Erfindungsgemäss wird dieser bestimmt als die Phasendifferenz zweier aufeinanderfolgender Symbole des Referenzsignals. Mit Hilfe einer Frequenzkorrekturkennlinie wird das Phasensteuersignal frequenz- bzw. phasenkorrigiert und kann schliesslich mit einem weiteren Faktor skaliert und damit für den Eingang des VCO angepasst werden. Zuvor wird das Phasensteuersignal allerdings D/A gewandelt und wenn nötig mit einem Tiefpassfilter gefiltert. Die Frequenzkorrekturkennlinie ihrerseits kann mittels eines oder mehreren Frequenzkennlinienparametern korrigiert bzw. nachgeführt werden.

Die Amplitudenmodulation des Sendesignals wird durch direkte Ansteuerung des Speisungseingangs des PA mit dem Amplitudensteuersignal durchgeführt. Das Amplitudensteuersignal erhält man durch Bestimmung der Amplitude des Referenzsignals am Ausgang des Pulsformungs-Filters. Dieses Amplitudensteuersignal wird schliesslich noch D/A gewandelt und anschliessend direkt als Steuerspannung für die Speisung des PA verwendet, um dessen Verstärkung zu modulieren. Um die Nicht-Linearität und die Temperaturabhängigkeit der Amplitudenmodulation zu kompensieren, wird vorzugsweise zusätzlich eine Vorverzerrung des Amplitudensteuersignals vorgenommen. Durch Nachführen der Amplitudenkennlinienparameter der Amplitudenkorrekturkennlinie des Vorverzerrers können die Abweichungen der Amplitudenmodulation korrigiert werden. Schliesslich kann das Amplitudensteuersignal, z.B. durch die D/A-Wandlung, unerwünschte Frequenzanteile enthalten. Diese können ebenfalls mit einem Tiefpassfilter herausgefiltert werden, da sie sonst auch mit dem PA verstärkt würden und im Sendesignal vorhanden wären.

Somit erhält man am Ausgang des PA das sowohl amplituden- wie auch phasenmodulierte Sendesignal. Erfindungsgemäss erfolgt eine Rückkopplung dieses Ausgangssignals. Im Gegensatz zum Stand der Technik kann die Rückkopplung jedoch langsam erfolgen, da mit dem rückgekoppelten Signal nicht die instantane Frequenz des Sendesignals korrigiert wird, sondern einerseits die Amplitudenkennlinienparameter des Vorverzerrers und andererseits die Frequenzkennlinienparameter der Frequenzkorrekturkennlinie frisch eingestellt werden.

Hierzu werden zuerst einige Symbole des Referenzsignals bzw. deren Amplituden und Phasen in einem Speicher abgelegt und zwischengespeichert. Weiter befindet sich im Rückkopplungspfad ein I/Q-Demodulator, welcher über einen Lokaloszillator an die Referenzfrequenz gebunden ist und der aus dem gesendeten Signal die einzelnen Symbole des Referenzsignals rekonstruiert. Nach der A/D-Wandlung werden die Amplituden bzw. Phasen dieser Symbole geschätzt. Mittels eines digitalen Vergleichs der geschätzten Phase der Rückkopplung mit der zuvor gespeicherten Phase dieses Symbols aus dem Sendepfad wird nun ein Phasenfehlersignal generiert, mit welchem die Frequenzkennlinienparameter für die Generierung des Phasensteuersignals nachgeführt bzw. korrigiert werden. Auch die geschätzten Amplitudenwerte der Rückkopplung werden digital mit den zuvor gespeicherten Amplitudenwerten des entsprechenden Symbols aus dem Sendepfad verglichen. Daraus wird ein Amplitudenfehlersignal gewonnen, mit dem die Amplitudenkennlinienparameter des Vorverzerrers nachgeführt bzw. korrigiert werden. Diese langsame, digitale Regelschlaufe kann als quasi Open-Loop Modulation angesehen werden.

Mit diesem Vorgehen, der Schätzung der Symbole, dem Vergleich der Ist-Werte mit den zugehörigen Soll-Werten sowie der Schätzung der notwendigen Parameter zur Korrektur der Phasen- und Amplitudensteuersignale lässt sich der sonst notwendige Einschwingvorgang des Systems vermeiden. Dies ermöglicht auch den Einsatz dieses Verfahrens bei schnellen Modulationsarten.

Eine weitere Möglichkeit, die Nichtlinearität und die Temperaturabhängigkeit des PA's zu kompensieren besteht darin, anstatt eines Vorverzerrers eine Regelschlaufe zu verwenden. Dabei wird das Sendesignal am Ausgang des PA rückgekoppelt, die Amplitude der Rückkopplung detektiert und das Differenzsignal zum Amplitudensteuersignal gebildet. Dieses Differenzsignal wird über einen Regler auf den Speisungseingang des PA geführt. Bei dieser Variante wird allerdings nicht das Ausgangssignal des PA, sondern das Ausgangssignal des VCO zum I/Q Demodulator rückgekoppelt. Da der Vorverzerrer wegfällt, entfällt in diesem Fall auch die Bildung des Amplitudenfehlersignals wie auch die Korrektur der Amplitudenkennlinienparameter.

Viele der obigen Arbeitsschritte erfolgen auf digitaler Basis und können somit auf einem Chip (z.B. in einem DSP (Digital Signal Processor)) integriert werden: die Verarbeitung der binären Daten mit dem I/Q-Mapper, die Pulsformung, die Bestimmung und Speicherung von Amplitude und Phase der Symbole des Referenzsignals, die Generierung des Amplitudensteuersignals (inklusive Vorverzerrung), die Generierung des Phasensteuersignals, die Schätzung von Amplitude und Phase eines Symbols des rückgekoppelten Signals nach der A/D-Wandlung und auch der Vergleich des geschätzten mit dem abgespeicherten Referenzsignal sowie die Nachführung der Kennlinienparameter für den Phasen- und den Amplitudenpfad. Auch die Filterung nach dem D/A-Wandler kann integriert werden.

Nach der Aufteilung des Referenzsignals in einen Amplituden- und einen Phasenteil ist die Synchronität der beiden Signale nicht mehr gewährleistet. Typischerweise ist die Verzögerung im Amplitudenpfad grösser wie diejenige im Phasenpfad, wobei je nach Implementation aber auch das Gegenteil möglich ist. Um Verzerrungen des Sendesignals zu vermeiden wird daher entweder das Phasensteuersignal oder das Amplitudensteuersignal zur Synchronisation mit dem jeweils anderen Signal einer Verzögerung unterworfen. Das benötigte Verzögerungsglied kann irgendwo im Phasen- oder Amplitudenpfad plaziert werden, vorzugsweise jedoch direkt vor der D/A-Wandlung.

Um beim Einschalten des Senders ein rasches Einschwingen des Systems sicherzustellen, können verschiedene Mechanismen zur Frequenzsynchronisation (engl.: frequency tracking) des Referenzsignals und der Rückkopplung angewendet werden. Mittels einer Look-Up Table erfolgt im Modulator z.B. eine direkte Frequenzvorwahl. Für Frequenzfehler, die aus der Rückkopplung nicht mehr eindeutig gewonnen werden können, kann auch eine Zählerschaltung in den Rückkopplungspfad eingefügt werden.

Eine Schaltungsanordnung zur Durchführung dieses Verfahrens umfasst mehrere Schaltungsteile. Einen spannungsgesteuerten Oszillator (VCO) als ersten Schaltungsteil und einen Leistungsverstärker (PA) als zweiten Schaltungsteil. Mit dem VCO wird dem Sendesignal die Phaseninformation und mit dem PA die Amplitudeninformation aufmoduliert. Gleichzeitig dient der PA zur Verstärkung des Sendesignals auf den gewünschten Sendepegel. Das Ausgangssignal des VCO wird dabei als Signaleingang des PA verwendet. In einem dritten Schaltungsteil wird aus dem Referenzsignal das Amplitudensteuersignal generiert, das auf den Speisungseingang des PA geführt wird und im vierten Schaltungsteil wird aus dem Referenzsignal das Phasensteuersignal generiert, das auf den Eingang des VCO geführt wird.

Die soeben beschriebene Schaltungsanordnung wird vorzugsweise für Sender/Empfänger-Schaltungen in Mobilfunktelefonen verwendet. Da nur wenige der beschriebenen Funktionsblöcke diskret realisiert werden müssen, resultieren kompakte Schaltungen. Die Schaltung eignet sich für Geräte, die nur eine bestimmte Modulationsart beherrschen. Mit wenig Zusatzaufwand ist es jedoch möglich, ein- und dieselbe Schaltung zur Erzeugung des Sendesignals in verschiedenen Modulationsformaten zu verwenden.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1    Ein Blockschaltbild eines erfindungsgemässen Senders,

Fig. 2    ein Blockschaltbild des digitalen Systemteils des Senders,

Fig. 3    ein Blockschaltbild einer Verarbeitungseinheit des digitalen Systemteils.

Grundsätzlich sind in den Figuren gleiche Teile mit gleichen Bezugszeichen versehen.

## Wege zur Ausführung der Erfindung

Anhand eines digital gesteuerten Senders soll die Erfindung im Detail erläutert werden. Der beschriebene Sender wird vorzugsweise in multimode Mobilfunktelefonen eingesetzt, welche diversen Ansprüchen gerecht werden müssen. Entsprechende Geräte sollten nicht nur mehrere verschiedene Modulationsarten beherrschen, sie sollten zudem klein und energiesparend sein.

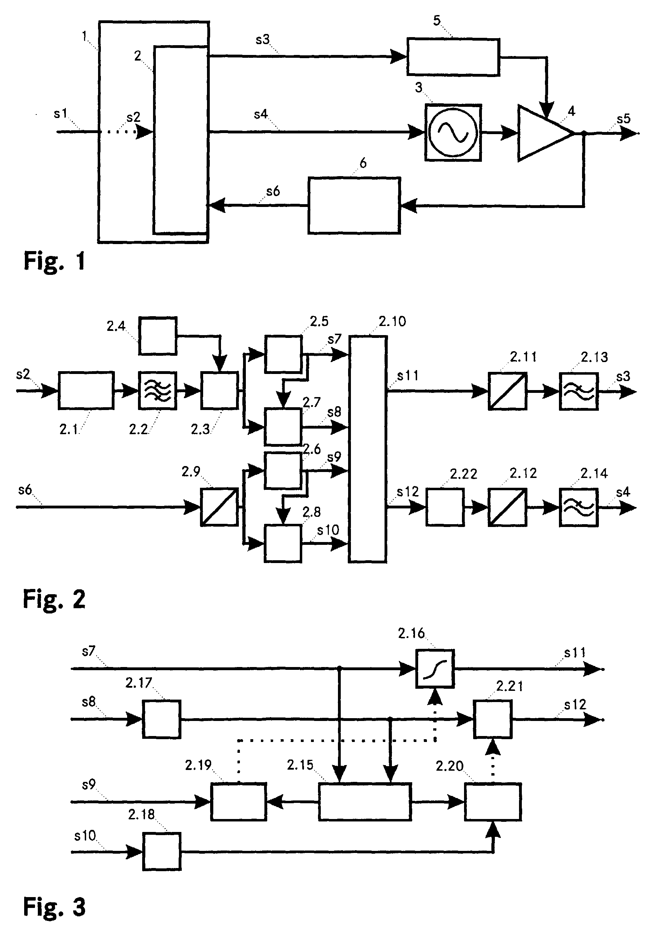

Figur 1 zeigt schematisch das Blockschaltbild eines digital gesteuerten Senders. Dieser besteht im wesentlichen aus einem Basisbandprozessor (1) mit einem darin integrierten digitalen Signalprozessor (2), einem VCO (3), einem PA (4), einem Envelope-Modulator (5) und einem I/Q-Demodulator (6).

Die zu übertragenden Daten (s1), welche beispielsweise als Sprachsignale in analoger Form vorliegen, werden vor oder im Basisbandprozessor (1) in binäre Daten (s2) umgewandelt. Aus diesen binären Daten (s2) erzeugt der digitale Signalprozessor (2) ein Modulationssignal, das vor der anschliessenden D/A Wandlung und Filterung in zwei analoge, zeitabhängige Signale aufgeteilt wird. Am Ausgang des digitalen Signalprozessors (2) stehen dann nach der D/A-Wandlung und der Filterung das analoge Amplitudensteuersignal (s3) r und das analoge Phasensteuersignal (s4) φ zur Verfügung. Das analoge Phasensteuersignal (s4) φ wird direkt auf den Eingang des VCO (3) geführt, welcher entsprechend dem Momentanwert von φ die Frequenz bzw. die Phase seines Ausgangssignals variiert. Dieses Ausgangssignal des VCO (3) wird nun auf den Signaleingang des PA (4) geführt und erscheint verstärkt an dessen Ausgang. Erfindungsgemäss wird aber nicht nur die Phase, sondern auch die Amplitude des Sendesignals (s5) moduliert. Dies erfolgt durch die Steuerung der Verstärkung des PA (4) und wird erreicht, indem das analoge Amplitudensteuersignal (s3) r über einen Envelope-Modulator (5) direkt an den Speisungseingang des PA (4) geführt wird. Am Ausgang des PA (4) erscheint somit das sowohl phasen- wie auch amplitudenmodulierte Sendesignal (s5).

Um ein korrektes Sendesignal (s5) zu gewährleisten, erfolgt eine Rückkopplung dieses Sendesignals (s5), mit deren Hilfe die Parameter zur Generierung des Amplitudensteuersignals (s3) und des Phasensteuersignals (s4) neu berechnet und entsprechend nachgeführt werden. Mit einem I/Q-Demodulator (6) wird dazu aus der Rückkopplung das analoge, zeitabhängige Ist-Symbolsignal (s6) $I_{ist}/Q_{ist}$ erzeugt, mit welchem die Generierung der beiden modulierenden Signale r und φ im digitalen Signalprozessor (2) gesteuert werden kann. Da bei der Erfindung das Sendesignal (s5) nicht direkt von der Rückkopplung abhängt, sondern die Rückkopplung nur dazu verwendet wird, die Parameter der Vorrichtungen zur Generierung der modulierenden Signale einzustellen, kann die Abtastrate $1/T_R$ im Rückkopplungspfad im Vergleich zur Abtastrate $1/T_S$ im Sendepfad langsam, z.B. $1/T_R = 3/T_S$, erfolgen.

Der Envelope-Modulator (5) übernimmt die Regelung der Speisespannung des PA (4) und ist beispielsweise ein Verstärker oder ein Feldeffekttransistor (FET). So kann dem Ausgangssignal des PA (4) (dem Sendesignal (s5)) die gewünschte Envelope aufgeprägt werden. Im Gegensatz zum Verhältnis Ausgangsspannung zu Signal-Eingangsspannung ist das Verhältnis Ausgangsspannung zu Speisespannung eines PA (4) praktisch linear. Mit dieser Art der Ansteuerung des PA (4) können daher unerwünschte Verzerrungen vermieden werden.

In Fig. 2 ist der digitale Signalprozessor (2), also der digital realisierbare Systemteil des Senders, schematisch dargestellt. Der Mapper (2.1) wandelt die binären Daten (s2) in sogenannte Symbole I/Q um. Wie aus den binären Daten (s2) die Symbole generiert werden, hängt vom verwendeten Modulationsverfahren ab. Als Beispiele seien hier das normale QPSK und das π/4 QPSK-Modulationsverfahren erwähnt.

Um ein erfindungsgemässes multimode Mobilfunktelefon herzustellen, muss lediglich der Mapper (2.1) so gestaltet sein, dass er die I/Q-Symbole mit bzw. für verschiedene Modulationsarten erzeugen kann. Mit einem weiteren Eingangssignal könnte dann z.B. gesteuert werden, mit welcher Modulationsart die I/Q-Symbole generiert werden sollen.

Ein Symbol I/Q besteht nun aus dem Realteil I und aus dem Imaginärteil Q eines Punktes der komplexen Ebene. Reiht man diese I/Q-Symbole aneinander und filtert sie mit einem Symbolfilter (2.2), entsteht das I/Q-Signal mit der Symbolrate $1/T_Y$. In diesem Zusammenhang sollte auch beachtet werden, dass die Abtastrate $1/T_R$ im Rückkopplungspfad vorzugsweise ein kleines Vielfaches der Symbolrate $1/T_Y$ sein sollte.

Welche Art von Symbolfilter (2.2) eingesetzt wird, hängt häufig davon ab, welche Modulationsart verwendet wird. Bei GSM werden beispielsweise meist Gaussfilter eingesetzt. Im vorliegenden Beispiel wird ein Nyquistfilter verwendet. Bei dieser Art Filter entsprechen die Nulldurchgänge der Impulsantwort gerade der Symbolrate $1/T_Y$. Dies kann z.B. mit einem Raised-Cosine-Filter erreicht werden. Durch Aufteilung dieses Filters in ein Sende- und ein Empfangsfilter erhält man ein Matched-Filter für ein verbessertes Signal zu Rauschverhältnis. Durch Verwendung von zwei zusammengeschalteten Root-Raised-Cosine-Filtern als Matched-Filter bleibt auch in diesem Fall das Nyquistkriterium erfüllt.

Das gefilterte I/Q-Signal wird im Multiplikator (2.3) mit einem von einem Rampengenerator (2.4) erzeugten Rampensignal multipliziert. Jetzt folgt die Aufteilung dieses Signals in den Amplitudenanteil und den Phasenanteil. Im Amplitudendetektor (2.5) wird die Grösse der Amplitude r' (s7) des I/Q-Signals bestimmt und im Divisor (2.7) wird das normierte I'/Q'-Signal (s8) berechnet, indem das I/Q-Signal durch r' geteilt wird.

Mit dem Ist-Symbolsignal (s6) $I_{ist}/Q_{ist}$ aus dem Rückkopplungspfad wird nach der A/D-Wandlung im A/D-Wandler (2.9) ähnlich verfahren wie mit dem I/Q-Signal im Datenpfad. Zuerst wird im Amplitudendetektor (2.6) die Grösse der Amplitude r'$_{ist}$ (s9) bestimmt, womit es im Divisor (2.8) zum I'$_{ist}$/Q'$_{ist}$ Signal (s10) normiert wird.

Mit Hilfe der Grösse der Amplitude des I/Q-Signals r' (s7), der Grösse der Amplitude des $I_{ist}/Q_{ist}$-Signals r'$_{ist}$ (s9) sowie dem normierten I'/Q'-Signal (s8) und dem normierten I'$_{ist}$/Q'$_{ist}$-Signal (s10) werden in der Verarbeitungseinheit (2.10) anschliessend die beiden modulierenden Signale, das digitale Amplitudensteuersignal (s11) und das digitale Phasensteuersignal (s12) generiert, welche nach Durchlaufen je eines D/A-Wandlers (2.11 und 2.12) und eines Filters (2.13, 2.14) das analoge Amplitudensteuersignal (s3) resp. das analoge Phasensteuersignal (s4) bilden. Um die Synchronisation zwischen Phasen- und Amplitudenpfad zu gewährleisten, ist ein Verzögerungsglied (2.22) vorgesehen. Dieses befindet sich im Phasenpfad vor der D/A-Wandlung des Phasensteuersignals und verzögert dieses, bis es mit dem Amplitudensteuersignal synchron ist.

Fig. 3 schliesslich zeigt, wiederum schematisch, die Verarbeitungseinheit (2.10). Sie umfasst einen Speicher (2.15), einen Vorverzerrer (2.16), zwei Phasendetektoren (2.17, 2.18), zwei Parameter-Berechnungseinheiten (2.19, 2.20) sowie eine Frequenzkorrektureinheit (2.21). Im Phasendetektor (2.17) wird zunächst die Phase φ' des I/Q' -Signals (s8) als ATAN(Q'/I') berechnet und, wie das Signal mit der Amplitudengrösse r' auch, mit der Abtastrate $1/T_S$ abgetastet. Die so erhaltenen, zusammengehörenden Phasen- bzw. Ampiltudensamples werden dann im Speicher (2.15) abgelegt. Auch vom I'$_{ist}$/Q'$_{ist}$-Signal (s10) wird die Phase φ'$_{ist}$ als ATAN(Q'$_{ist}$/I'$_{ist}$) berech-

net und dieses Signal, wie auch $r'_{ist}$ (s9), mit $1/T_R$ abgetastet. Wie schon erwähnt, kann diese Abtastrate $1/T_R$ jedoch kleiner gewählt werden als $1/T_S$. Damit nun ein gesendetes Sample mit einem rückgekoppelten Sample verglichen werden kann, muss das gesendete Sample solange zwischengespeichert werden, bis die entsprechenden Samples von $r'_{ist}$ und $ATAN(Q'_{ist}/I'_{ist})$ des rückgekoppelten Signals vorliegen. Diese Verzögerung ist mit $\tau$ bezeichnet und wird zu Beginn mittels Kalibrierung bestimmt. Da die Verzögerung $\tau$ typischerweise nicht ein Vielfaches von $T_S$ ist, müssen die Werte eines der beiden Samples interpoliert werden. Stehen beide Samples zur Verfügung, wird in der Parameter-Berechnungseinheit (2.19) zunächst die Vorverzerrung des Vorverzerrers (2.16) im rückgekoppelten Signal $r'_{ist}$ rückgängig gemacht. D.h. es wird unter Verwendung der Amplitudenkorrekturkennlinie des Vorverzerrers (2.16) entzerrt, damit zur nachfolgenden Korrektur nur noch die Verzerrung des Signal durch den PA enthalten ist. Je nach Implementation kann diese Rück-Entzerrung auch weggelassen werden. Danach werden die beiden Amplituden $r'$ und $r'_{ist}$ verglichen und daraus die Amplitudenkorrekturkennlinie des Vorverzerrers (2.16) neu berechnet. Um die Amplitudenkorrekturkennlinie des Vorverzerrers neu zu bestimmen, wird beispielsweise jeder gemessene Wert $r'_{ist}$ der Amplitude eines Symbols mit dem zugehörigen, abgespeicherten Wert $r'$ in einer Tabelle eingetragen. Trägt man diese Werte als Punkte in einem Diagramm auf, so erhält man die Amplitudenkorrekturkennlinie des Vorverzerrers, die mit der Zeit immer genauer wird. Fehlende Punkte können durch Interpolation gewonnen werden.

In der Parameter-Berechnungseinheit (2.20) werden die beiden Phasen $\varphi'$ und $\varphi'_{ist}$ verglichen und daraus die Frequenzkennlinienparameter der Frequenzkorrektureinheit (2.21) neu berechnet. Diese Berechnung umfasst einerseits eine Skalierung mit einem Faktor $\beta$, welcher von der Steilheit des VCO (3) und vom Output-Swing des D/A-Wandlers abhängt und zu Beginn durch Kalibrierung bestimmt wird und andererseits eine Frequenzkorrektur mittels Korrektur der Eingangsspannung des VCO (3) mit der statischen Frequenzdifferenz zwischen dem gesendeten und dem rückgekoppelten Signal. Der ebenfalls auftretende statische Phasenoffset stört nicht und muss deshalb auch nicht korrigiert werden.

Mit den neu berechneten Kenlinienparametern wird schliesslich sowohl das Signal $r'$ als auch das Signal $\varphi'$ mit dem Vorverzerrer (2.16) resp. der Frequenzkorrektureinheit (2.21) entsprechend korrigiert und am Ausgang der Verarbeitungseinheit (2.10) können die beiden modulierenden Signale, das digitale Amplitudensteuersignal (s11) und das digitale Phasensteuersignal (s12) abgegriffen werden. Diese beiden Signale bilden nach der Wandlung und der Filterung gemäss Fig. 3 das analoge Amplitudensteuersignal (s3) und das analoge Phasensteuersignal (s4). Im Zusammenhang mit dieser Filterung ist noch zu erwähnen, dass ein starkes Übertasten, also eine grosse Abtastrate $1/T_S$, zu einer wesentlichen Vereinfachung der anschliessenden analogen Filterung führt.

Um ein schnelles Einschwingen des Senders zu erreichen, sind weitere Komponenten vorgesehen. Zunächst erfolgt eine durch eine Look-Up Table realisierte, direkte Frequenzvorwahl am Modulator. Diese genügt schon in vielen Fällen. Um jedoch auch Frequenzfehler im rückgekoppelten Signal korrigieren zu können, die so gross sind, dass sie nicht mehr eindeutig erfasst werden können (d.h. wenn der Frequenzfehler grösser als $\pi/T_R$ ist), wird zusätzlich eine Zählerschaltung in die Rückkopplung eingefügt, die z.B. die mittlere Anzahl Flanken im Intervall $T_R$ zählt. Damit wird eine eindeutige Bestimmung der Frequenzdifferenz in der Verarbeitungseinheit (2.10) ermöglicht. Mit einem PLL (Phase-Locked Loop) im Rückkopplungspfad wird sowohl der I/Q-Demodulator als auch der digitale Schaltkreis an eine durch einen Lokaloszillator erzeugte Referenzfrequenz gebunden. Bei GSM beträgt diese Referenzfrequenz üblicherweise 13 MHz.

Zusammenfassend ist festzustellen, dass es das vorliegende Verfahren erlaubt, digital gesteuerte Sender mit einer langsamen, digitalen Regelschlaufe mit quasi Open-Loop Modulation zu bauen, mit denen sowohl eine spektral einwandfreie Phasenmodulation als auch eine lineare Amplitudenmodulation erreicht werden können. Die Bandbreite des Sendesignals wird hauptsächlich durch die Bandbreite der D/A-Wandler begrenzt. Viele der benötigten Komponenten lassen sich auf einem Chip integrieren, was eine zusätzliche Verkleinerung der Schaltungen erlaubt. Mit geringem Mehraufwand kann somit ein universeller multimode-Sender mit niedrigem Energieverbrauch und kleinen Abmessungen bzw. geringem Gewicht hergestellt werden, mit welchem sich fast beliebige Signale auf einen Träger modulieren und verstärken lassen.

**Patentansprüche**

1. Verfahren zur Erzeugung eines Sendesignals in einem Modulationsformat, wobei das Sendesignal entsprechend dem Modulationsformat mit Hilfe eines spannungsgesteuerten Oszillators und eines Leistungsverstärkers erzeugt wird, dadurch gekennzeichnet, dass eine Phase des Sendesignals durch direkte Ansteuerung des spannungsgesteuerten Oszillators mit einem Phasensteuersignal und eine Amplitude des Sendesignals durch Ansteuerung des Leistungsverstärkers mit einem Amplitudensteuersignal moduliert wird.

2. Verfahren nach Anspruch 1, dadurch gekennzeichnet, dass entsprechend dem Modulationsformat mit einem I/Q-Mapper aus insbesondere binären Daten komplexwertige Symbole generiert werden, welche durch eine Amplitude und eine Phase definiert sind und die ein digitales Referenzsignal bilden, welches anschliessend mit einem Pulsformungs-Filter gefiltert und danach als Amplituden- und Phasensteuersignal verwendet wird, und dass durch einen digitalen Phasenvergleich des Phasensteuersignals mit einer Rückkopplung ein Phasenfehlersignal generiert wird, mit welchem das Phasensteuersignal korrigiert wird.

3. Verfahren nach Anspruch 2, dadurch gekennzeichnet, dass das Referenzsignal mit einem Rampensignal multipliziert wird.

4. Verfahren nach Anspruch 2 oder 3, dadurch gekennzeichnet, dass das Phasensteuersignal erzeugt wird, indem die Phase des Symbols des Referenzsignals bestimmt, eine Phasendifferenz zur Phase des vorhergehenden Symbols gebildet, diese Phasendifferenz skaliert, mit Hilfe einer Frequenzkorrekturkennlinie korrigiert, mit einem D/A Wandler in ein analoges Signal umgewandelt und schliesslich mit einem Filter spektral begrenzt wird, wobei die Frequenzkorrekturkennlinie mit zumindest einem Frequenzkennlinienparameter veränderbar ist.

5. Verfahren nach einem der Ansprüche 2 bis 4, dadurch gekennzeichnet, dass das Amplitudensteuersignal erzeugt wird, indem die Amplitude eines Symbols des Referenzsignals bestimmt, mit einem Vorverzerrer korrigiert, mit einem D/A-Wandler in ein analoges Signal umgewandelt und schliesslich mit einem Filter spektral begrenzt wird, wobei eine Amplitudenkorrekturkennlinie des Vorverzerrers mit zumindest einem Amplitudenkennlinienparameter veränderbar ist.

6. Verfahren nach Anspruch 5, dadurch gekennzeichnet, dass die Amplitude und die Phase einer Mehrzahl von Symbolen des Referenzsignals zwischengespeichert werden, dass die Rückkopplung hinter dem Leistungsverstärker abgegriffen wird, dass aus der Rückkopplung mit einem I/Q-Demodulator die Symbole des Referenzsignals und daraus deren Amplitude und Phase geschätzt werden, dass das Phasenfehlersignal durch den digitalen Phasenvergleich der geschätzten Phase der Rückkopplung und der zwischengespeicherten Phase des Referenzsignals generiert wird, dass ein Amplitudenfehlersignal durch einen digitalen Amplitudenvergleich der geschätzten Amplitude der Rückkopplung und der zwischengespeicherten Amplitude des Referenzsignals generiert wird und dass das Phasenfehlersignal zu einer Korrektur des oder der Frequenzkennlinienparameter und das Amplitudenfehlersignal zu einer Korrektur des oder der Amplitudenkennlinienparameter benutzt wird.

7. Verfahren nach einem der Ansprüche 2 bis 4, dadurch gekennzeichnet, dass das Amplitudensteuersignal erzeugt wird, indem die Amplitude eines Symbols des Referenzsignals bestimmt, mit einem D/A-Wandler in ein analoges Signal umgewandelt, mit einem Filter spektral begrenzt wird und schliesslich ein Differenzsignal zu einem rückgekoppelten Sendesignal gebildet wird.

8. Verfahren nach Anspruch 7, dadurch gekennzeichnet, dass die Phasen einer Mehrzahl von Symbolen des Referenzsignals zwischengespeichert werden, dass die Rückkopplung vor dem Leistungsverstärker, hinter dem spannungsgesteuerten Oszillator abgegriffen wird, dass aus der Rückkopplung mit einem I/Q-Demodulator die Symbole des Referenzsignals und daraus deren Phasen geschätzt werden, dass das Phasenfehlersignal durch den digitalen Phasenvergleich der geschätzten Phase der Rückkopplung und der zwischengespeicherten Phase des Referenzsignals generiert wird und dass das Phasenfehlersignal zu einer Korrektur des oder der Frequenzkennlinienparameter benutzt wird.

9. Verfahren nach Anspruch 6 oder 8, dadurch gekennzeichnet, dass der I/Q-Demodulator über einen Lokaloszillator an eine Referenzfrequenz gebunden wird.

10. Verfahren nach einem der Ansprüche 1 bis 9, dadurch gekennzeichnet, dass das Phasensteuersignal mit dem Amplitudensteuersignal synchronisiert wird, indem eines der beiden Signale einer Verzögerung unterworfen wird.

11. Verfahren nach einem der Ansprüche 2 bis 10, dadurch gekennzeichnet, dass Mittel für eine Frequenzsynchronisation des Referenzsignals und der Rückkopplung vorgesehen sind.

12. Schaltungsanordnung zur Durchführung des Verfahrens nach Anspruch 1 mit einem, einen spannungsgesteuerten Oszillator beinhaltenden, ersten Schaltungsteil und einem, einen Leistungsverstärker beinhaltenden, zweiten Schaltungsteil, dadurch gekennzeichnet, dass die Schaltungsanordnung einen dritten Schaltungsteil zur Generierung des Amphitudensteuersignals und einen vierten Schaltungsteil zur Generierung des Phasensteuersignals aufweist und dass das Phasensteuersignal auf einen Eingang des spannungsgesteuerten Oszillators, dessen Ausgang auf einen Signaleingang des Leistungsverstärkers und das Amphitudensteuersignal auf einen Speisungseingang des Leistungsverstärkers geführt wird.

13. Verwendung der Schaltungsanordnung nach Anspruch 12 in einem Mobilfunktelefon, wobei zur Erzeugung des Sendesignals ein bestimmtes oder wahlweise eines von zumindest zwei verschiedenen Modulationsformaten verwendet wird.

**Fig. 1**

**Fig. 2**

**Fig. 3**

EP 1 056 248 A1

| | Europäisches Patentamt | EUROPÄISCHER RECHERCHENBERICHT | Nummer der Anmeldung EP 99 81 0456 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | RAAB : "L-band transmitter using Kahn EER technique" IEEE TRANSACTIONS ON MICROWAVE THEORY AND TECHNIQUES, Bd. 46, Nr. 12, Dezember 1998 (1998-12), Seiten 2220-2224-2224, XP000805603 New York, US ISSN: 0018-9480 * Abbildung 6 * | 1-13 | H04L27/00 H04L27/36 |
| X | EP 0 863 607 A (HEWLETT PACKARD) 9. September 1998 (1998-09-09) * Abbildung 3 * | 1-13 | |
| X | WO 99 25104 A (ERICSSON) 20. Mai 1999 (1999-05-20) * Seite 7, Zeile 17 - Zeile 32 * | 1,10,12, 13 | |
| X | EP 0 708 546 A (DEUTSCHE TELEKOM; TELEFUNKEN) 24. April 1996 (1996-04-24) * Abbildung 7 * | 1,10,12, 13 | |

RECHERCHIERTE SACHGEBIETE (Int.Cl.7)

H04L

Der vorliegende Recherchenbericht wurde für alle Patentansprüche erstellt

| Recherchenort DEN HAAG | Abschlußdatum der Recherche 1. Februar 2000 | Prüfer Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

10

**ANHANG ZUM EUROPÄISCHEN RECHERCHENBERICHT**
**ÜBER DIE EUROPÄISCHE PATENTANMELDUNG NR.**                    EP 99 81 0456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2000

| Im Recherchenbericht angeführtes Patentdokument | Datum der Veröffentlichung | Mitglied(er) der Patentfamilie | Datum der Veröffentlichung |
|---|---|---|---|
| EP 0863607 A | 09-09-1998 | US 5847602 A | 08-12-1998 |
| | | JP 10256843 A | 25-09-1998 |
| | | US 5973556 A | 26-10-1999 |
| WO 9925104 A | 20-05-1999 | US 6002923 A | 14-12-1999 |
| | | AU 1354999 A | 31-05-1999 |
| EP 0708546 A | 24-04-1996 | DE 19535075 A | 25-04-1996 |

EPO FORM P0461